# EUROPEAN PATENT SPECIFICATION

(11) **EP 4 396 568 B1**
(45) Date of publication and mention of the grant of the patent: **20.05.2026**
(21) Application number: 22773545.3
(22) Date of filing: 12.08.2022
(51) Int. Cl.: G01N 25/72

(54) **THERMOGRAPHIC INSPECTION APPARATUS AND INSPECTION METHOD**
THERMOGRAFISCHE PRÜFVORRICHTUNG UND PRÜFVERFAHREN
APPAREIL D'INSPECTION THERMOGRAPHIQUE ET PROCÉDÉ D'INSPECTION

(30) Priority: 31.08.2021 JP 2021141913; 03.08.2022 JP 2022124250
(43) Date of publication of application: 10.07.2024
(73) Proprietor: Ricoh Company, Ltd., Tokyo 143-8555 (JP)
(72) Inventor: MASUDA, Koji, Tokyo 143-8555 (JP); HINO, Makoto, Tokyo 143-8555 (JP); HIRAKAWA, Makoto, Tokyo 143-8555 (JP)
(74) Representative: Marks & Clerk LLP
(86) International application number: PCT/IB2022/057527
(87) International publication number: WO 2023/031710

(56) References cited:
- WO-A2-2015/140797
- JP-A- 2001 249 096
- JP-A- 2006 337 232
- JP-A- 2017 067 549
- JP-A- 2020 041 840
- JP-A- 2020 169 821
- US-A1- 2008 302 707

## Description

### [Technical Field]

The present disclosure relates to an inspection apparatus and an inspection method.

### [Background Art]

A package inspection apparatus for inspecting a package sealed with contents such as food enclosed therein is known. The inspection apparatus inspects a sealing portion of the package to check whether the sealing portion is correctly sealed or not.

For example, PTL 1 discloses an inspection apparatus for inspecting the package including an object in order to perform inspection with high accuracy. The inspection apparatus checks whether the object is caught in the sealing portion of the package or not. The inspection apparatus includes: a light beam emitting unit; a light detection unit that detects a light beam transmitted through the package; and an inspection unit that generates an image based on a detection result of the light beam detection unit and performs inspection according to the image.

However, such a package inspection apparatus described above may involve the use of the light emitting unit and the light detection unit whose wavelengths match each other according to the package material and inevitably involve a fixed layout of the light emitting unit and the light detection unit (i.e., the light emitting unit and the light detection unit face each other), because of the use of light transmitted through the package.

### [Citation List]

### [Patent Literature]

[PTL 1]
Japanese Unexamined Patent Application Publication No. 2015-155831
WO-A-2015/140797 discloses methods and systems for determining integrity of a package.

### [Summary of Invention]

### [Technical Problem]

An aim of the present invention is to increase latitude in the wavelength and the layout of the light emitting unit and the light detection unit used for the inspection apparatus of the package.

### [Solution to Problem]

The invention is set out in the appended set of claims.

### [Advantageous Effects of Invention]

According to embodiments of the present invention, the latitude of the wavelength and the layout is increased with respect to the light emitting unit and the light detection unit used for inspecting the package.

### [Brief Description of Drawings]

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.
[FIG. 1]

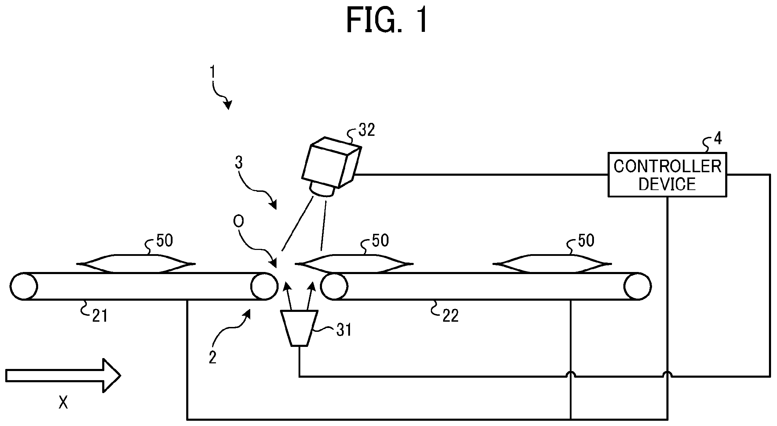

   FIG. 1 is a diagram of a configuration of an inspection apparatus according to an embodiment:
[FIG. 2]

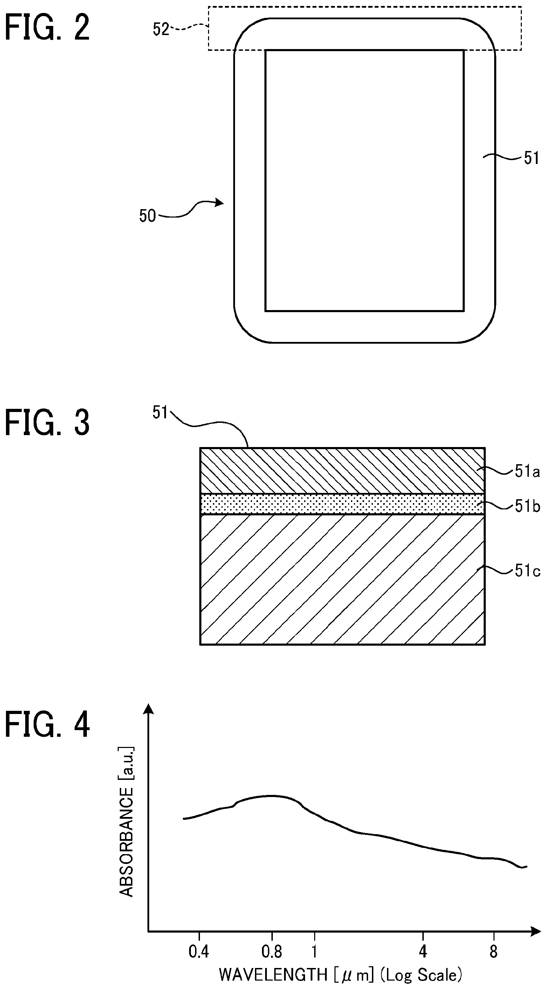

   FIG. 2 is a diagram of a package to be inspected by the inspection apparatus of FIG.1;
[FIG. 3]
   FIG. 3 is a diagram of a configuration of the package of FIG. 2;
[FIG. 4]
   FIG. 4 is a graph of the absorbance of aluminum included in the package of FIG. 2;
[FIG. 5]

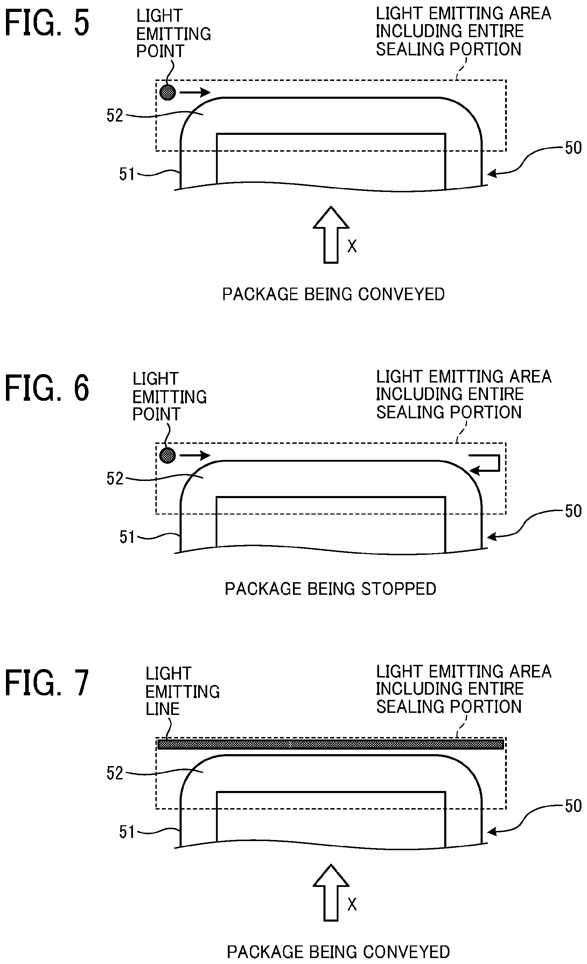

   FIG. 5 is a diagram of a point light source to emit light on the package being conveyed;
[FIG. 6]
   FIG. 6 is a diagram of a point light source to emit light on the package being stopped;
[FIG. 7]

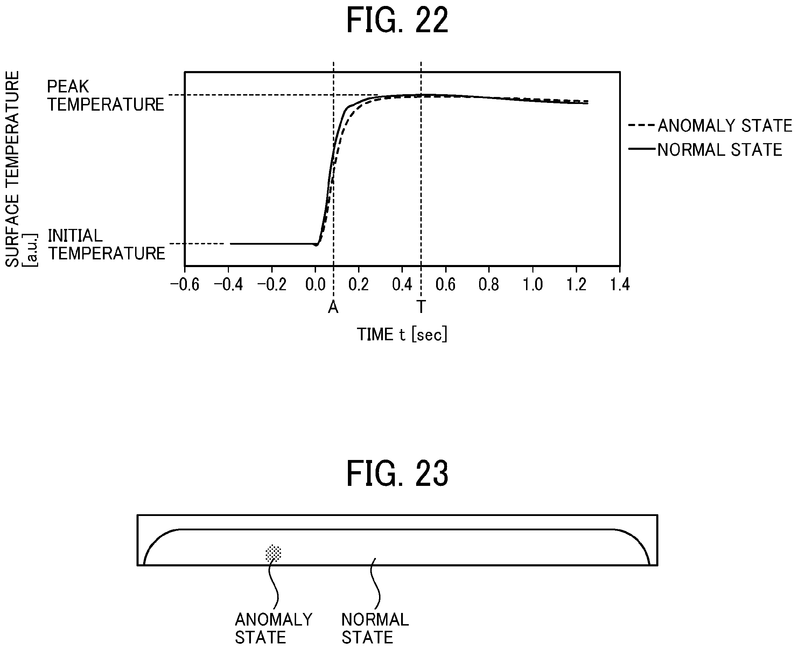

   FIG. 23 is a two-dimensional image related to determination of pass-or-fail for the sealing portion.

### [Description of Embodiments]

The terminology used herein is for the purpose of describing particular embodiments only and is not intended to be limiting of the present invention. As used herein, the singular forms "a," "an," and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Hereinafter, embodiments of the inspection apparatus and the inspection method will be described in detail with reference to the accompanying drawings.

FIG. 1 is a diagram of a configuration of an inspection apparatus 1 according to an embodiment. FIG. 2 is a diagram of a package 50 to be inspected by the inspection apparatus 1. The inspection apparatus 1 checks whether the package 50 is properly sealed or not, and rejects the package 50 found to be an anomaly from the production line.

The package 50 will be described.

As illustrated in FIG. 2, the package 50, which is a bag-shaped package material 51, contains, e.g., food such as curry or soup (the contents of the package 50). In the package 50 illustrated in FIG. 2, the bag-shaped opening is sealed by bonding the package materials 51 to each other.

For the package material 51 of the package 50, a single-layer plastic film, a single-layer plastic film having a surface treatment, or a plastic film laminated with multiple single-layer films is used. Examples of the surface treatment include coating for adding moisture proof or vapor deposition of aluminum, silica, or alumina for adding gas barrier properties.

Further, as the package material 51 of the package 50, a film laminated with an aluminum foil 51b (FIG. 3) on the plastic film described above is used. The package material 51 laminated with the aluminum foil 51b is used in applications involving higher gas barrier properties and moisture proof properties. In particular, the package material 51 laminated with an aluminum foil 51b is a packaging container for pre-packaged food, retort food, a sealed pouch, or a retort pouch.

FIG. 3 is a diagram of a configuration of the package material 51. The package material 51 illustrated in FIG. 3 is a structural example of a package material 51 for the retort pouch. In the package material 51 in FIG. 3, a polyester film 51a, an aluminum foil 51b, and a non-oriented polypropylene (CPP) film 51c are laminated in this order from the surface of the package material 51. A film laminated with an aluminum foil or an aluminum deposition film as in the package material 51 in FIG. 3 has poor visual transparency, and a content packed inside the package material 51 is visually hard to be seen.

The package 50 illustrated in FIG. 2 has a bag-shaped opening in which the package materials 51 are facing each other. The bag-shaped opening is sealed by bonding the package materials 51 to each other, which is referred to as a sealing portion 52. The sealing portion 52 is bonded by heat sealing in which a heated bar is pressed against a portion to be sealed, that is, thermocompression bonding or an ultrasonic sealing in which a portion to be sealed is melted and bonded by ultrasonic vibration and pressurization.

Herein, a manufacturing process of the package 50 will be briefly described. The package 50 is manufactured by filling contents (e.g., food such as curry or soup) into a package material 51, which is bag-shaped, by a filling means (e.g., filling machine) and sealing the sealing portion 52 of the package material 51.

In such a manufacturing process, the inspection apparatus 1 inspects the package 50 sealed at the sealing portion 52 in order to make sure that the package 50 is tightly sealed and the content does not leak (i.e., seal inspection). In the seal inspection, the inspection apparatus 1 determines whether the sealing portion 52 has a normal state or an anomaly state (i.e., defect). The anomaly state is, for example, trapping, pinhole, wrinkle, and tunnel. Specifically, the trapping is a defect in which the contents are trapped in the sealing portion 52, the pinhole is a defect in which a hole is formed in the sealing portion 52, the wrinkle is a defect in which a crease appears when the sealing portion 52 is folded or crushed, and the tunnel is a defect in which a passage through which the contents may leak to the outside is formed in the sealing portion 52.

The inspection apparatus 1 will be described in detail.

As illustrated in FIG. 1, the inspection apparatus 1 includes a conveyor unit 2, an image acquisition device 3, and a controller unit 4.

The image acquisition device 3 includes a light emitting unit 31 (light emitter) disposed below the conveyor unit 2 and a light receiving unit 32 (light receiver) disposed above the conveyor unit 2.

The conveyor unit 2 includes a first conveyor part 21 and a second conveyor part 22. The first conveyor part 21 and the second conveyor part 22 convey the package 50 on an endless belt by rotationally driving the endless belt. The first conveyor part 21 is disposed on the upstream side in the conveying direction X of the package 50 with respect to the arrangement position of the image acquisition device 3. The second conveyor part 22 is disposed on the downstream side in the conveying direction X of the package 50 with respect to the arrangement position of the image acquisition device 3. The conveyor unit 2 has a gap O between the first conveyor part 21 and the second conveyor part 22. The gap O is also a space between the light emitting unit 31 and the light receiving unit 32. The distance, which is the gap O, between the first conveyor part 21 and the second conveyor part 22 is a distance that does not affect the conveyance of the package 50 from the first conveyor part 21 to the second conveyor part 22. Since the conveyor unit 2 has the configuration described above, the conveyor unit 2 conveys the package 50 through the space between the light emitting unit 31 and the light receiving unit 32.

The image acquisition device 3 acquires two-dimensional thermal information on the sealing portion 52 of the package 50 conveyed by the conveyor unit 2 as an image.

The light emitting unit 31 two-dimensionally emits light to the entire sealing portion 52 of the package 50 conveyed by the conveyor unit 2. The light emitting unit 31 may emit light to the package 50 being conveyed by the conveyor unit 2 at the gap O between the first conveyor part 21 and the second conveyor part 22 or may emit light to the package 50 temporarily being stopped on the conveyor unit 2.

The light receiving unit 32 two-dimensionally receives thermal radiation from the entire sealing portion 52 of the package 50. The thermal radiation is caused by the light emitting unit 31's emitting light to the sealing portion 52.

The light emitting unit 31 and the light receiving unit 32 will be described in detail.

As described above, the aluminum vapor deposition film or a film laminated with an aluminum foil is used in the package material 51 of the package 50, and at least aluminum is included in the package material 51 of the package 50. Thus, the light emitting unit 31 of the inspection apparatus 1 according to the present embodiment emits light to one side of the sealing portion 52 of the package 50, in which the light has a wavelength that at least aluminum absorbs. The aluminum foil 51b (FIG. 3) of the package material 51 absorbs the light emitted from the light emitting unit 31 and converts optical energy of the light into thermal energy. Heat generated in the aluminum foil 51b of the package material 51 is conducted between the surfaces of each layer and through each layer and reaches the surface of the package material 51. The package material 51 radiates light due to thermal radiation from the surface. The light radiation is emitted as a spectrum based on the Planck's law and is received by the light receiving unit 32. The light receiving unit 32 two-dimensionally receives information on the thermal radiation.

FIG. 4 is a graph of the absorbance of aluminum included in the package of FIG. 2; Aluminum has an absorbance spectrum illustrated in FIG. 4. As illustrated in FIG. 4, aluminum effectively absorbs light at the peak of the absorbance of near infrared light of 0.78 µm to 1.0 µm in wavelength. In addition, aluminum has a high absorbance for ultraviolet light (0.38 µm or shorter in wavelength) and visible light (0.38 µm to 0.78 µm in wavelength). The absorbance of aluminum decreases at a wavelength of 1 µm or longer. Preferably, the light emitting unit 31 emits at least one of ultraviolet light, visible light, or near infrared light. A halogen lamp capable of emitting light including at least ultraviolet light, visible light, and near infrared light can be applied to the light emitting unit 31 of the present embodiment. In general, a halogen lamp can emit light having a wavelength longer than a wavelength of visible light and has a very broad emission spectrum. Depending on the temperature of the halogen lamp, the halogen lamp includes a large amount of light (e.g., 50% or larger) having a wavelength longer than a wavelength of the near infrared light,

The light emitting unit 31 is not limited to a halogen lamp, and a xenon lamp capable of emitting ultraviolet light, visible light, or near infrared light may be applied. In general, the xenon lamp has a broad emission spectrum over ultraviolet light, visible light, and near infrared light, and has multiple sharp emission spectra in the near infrared light. The xenon lamp includes little light having a wavelength longer than near infrared (e.g., 5% or smaller). Such light having a wavelength longer than the wavelength of the near infrared light is also referred to as a heat ray and heats surrounding members, which affects downsizing of the apparatus and selection of components. Preferably, the light emitting unit 31 excludes light having a wavelength longer than near infrared wavelengths.

A near infrared light emitting diode (LED) or a near infrared laser having a peak wavelength in a near infrared wavelengths may be applied to the light emitting unit 31. Since the peak wavelength of the emission spectrum of the near infrared LED or the near infrared laser is substantially the same as the peak wavelength of the absorption spectrum of aluminum, light energy can be converted into thermal energy with high efficiency. The near infrared LED or the near infrared laser generally has a longer life than a life of a halogen lamp or a xenon lamp and has an advantage in a longer replacement cycle when used in the inspection apparatus 1 that continuously operates.

The light emitting unit 31 may be continuously turned on (i.e., DC light emission) or intermittently turned on (i.e., pulse light emission). However, in terms of life, preferably, the light emitting unit 31 can be intermittently turned on at about 1 Hz to 2 Hz. Specifically, the light emitting unit 31 is a laser, a light emitting diode, or a xenon lamp.

When continuously turned on (i.e., DC light emission), the light emitting unit 31 may be provided with an intermittent emission means (e.g., shutter) between the light emitting unit 31 and the package 50 so as to intermittently emit light to the package 50.

In the present embodiment, an increase in the surface temperature of the sealing portion 52 may be about several degrees of Celsius to 10°C. Depending on the cost of light source and size, a high-power light source may be used to further raise temperature. When the ambient temperature around the inspection apparatus 1 is about 20°C to 30°C, the surface temperature of the sealing portion is about 295K to 315K in absolute temperature. (0°C is 273K. When the ambient temperature is about 20°C to 30°C, it is about 293K to 303K. In consideration of the surface temperature of the sealing portion, it is about 295K to 315K) According to the Planck's law, the thermal radiation corresponding to 300K has wavelengths of about 3 µm or longer. Thus, the light emitted from the sealing portion 52 of the package 50 caused by thermal radiation has a wavelength of about 3 µm or longer according to the Planck's law. Thus, the light receiving unit 32 receives the light having a wavelength of 3 µm or longer.

As described above, since the wavelength of the light emitted from the light emitting unit 31 and the wavelength of the thermal radiation received by the light receiving unit 32 are different from each other (i.e., wavelength difference), the light receiving unit 32 does not receive the light emitted from the light emitting unit 31. Thus, the wavelength difference does not generate noise to the light receiving unit 32, and the light receiving unit 32 receives a signal having a higher quality.

In the transmission spectrum of the atmosphere, there are wavelength bands referred to as an atmospheric window in which the transmittance of the atmosphere is higher. When the inspection is performed in the atmosphere, it is preferable to use such wavelength bands. The wavelength bands are, for example, middle wavelength infrared radiation (MWIR) having a wavelength band of 3 to 6 µm and long wavelength infrared radiation (LWIR) having a wavelength band of 8 to 14 µm.

In addition, since the thermal radiation spectrum of about 300K has a peak at about 10 µm in wavelength, it is preferable to use the atmospheric window of LWIR in order to achieve a higher sensitive measurement.

Thus, in the present embodiment, an infrared light receiving element that receives the LWIR is used as the light receiving unit 32. The infrared light receiving element includes a cooling infrared light receiving element cooled to extremely low temperature to achieve higher sensitivity and an uncooled infrared light receiving element operable at room temperature. In the present embodiment, the uncooled infrared light receiving element is used as the light receiving unit 32 because it is practically low cost.

The light emitting unit 31 may be a point light source, a line light source, or an area light source as long as these light sources two-dimensionally emits light to the entire sealing portion 52.

FIG. 5 is a diagram of a point light source in the case of emitting light to the package 50 being conveyed. FIG. 6 is a diagram of a point light source in the case of emitting the light to the package 50 being stopped. As illustrated in FIGS. 5 and 6, the point light source emits the light as a point shape to the sealing portion 52. As illustrated in FIG. 5, when emitting the light to the package 50 being conveyed, the light emitting unit 31 two-dimensionally emits the light by the point light source through an optical system that one-dimensionally scans the sealing portion 52. As illustrated in FIG. 6, when emitting the light to the package 50 being stopped, the light emitting unit 31 two-dimensionally emits the light by the point light source through an optical system that two-dimensionally scans the sealing portion 52.

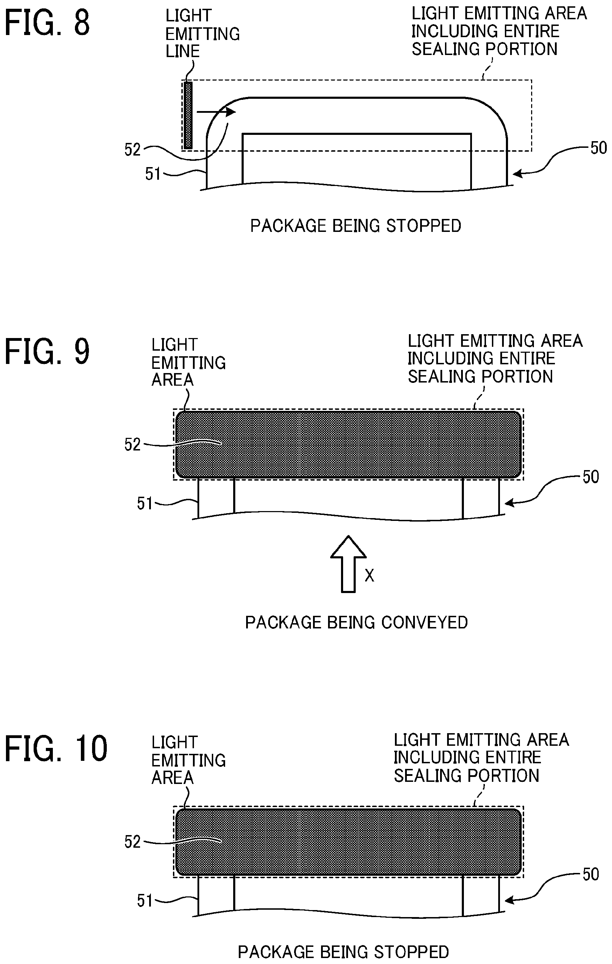

FIG. 7 is a diagram of a line light source in the case of emitting the light to the conveyed package 50. FIG. 8 is a diagram of a line light source in the case of emitting the light to the package 50 being stopped. As illustrated in FIGS. 7 and 8, the line light source emits the light to the sealing portion 52 in a line shape. The line light source may be composed of the point light sources arranged in one row or multiple rows or may form a line-shaped emission pattern through an optical system using the point light sources. As illustrated in FIG. 7, when emitting the light to the package 50 being conveyed, the light emitting unit 31 two-dimensionally emits the light to the package 50 by a line light source longer than the width of the sealing portion 52 (i.e., longitudinal width of the sealing portion 52). As illustrated in FIG. 8, when emitting the light to the package 50 being stopped, the light emitting unit 31 two-dimensionally emits the light to the package 50 by a line light source slightly longer than the lateral width of the sealing portion 52 through an optical system that one-dimensionally scans the sealing portion 52.

FIG. 9 is a diagram of an area light source in the case of emitting the light to the package 50 being conveyed. FIG. 10 is a diagram of the area light source in the case of emitting the light to the package 50 being stopped. As illustrated in FIGS. 9 and 10, the area light source emits the light to the sealing portion 52 in an area shape as one shot. The area light source may be composed of the point light sources arranged vertically and horizontally, line light sources arranged in a row, or these light sources combined with an optical system to form an area shaped emitting pattern. Thus, in the area light source, the point light sources are arrayed in vertical and horizontal directions. As illustrated in FIG. 9, when emitting the light to the package 50 being conveyed, the light emitting unit 31 using the area light source emits the light to the package 50 by one shot. As illustrated in FIG. 10, when emitting the light to the package 50 being stopped, the light emitting unit 31 using the area light source emits the light to the package 50 by one shot.

On the other hand, the light receiving unit 32 may be any one of the point light receiving element, the line light receiving element, and the area light receiving element as long as these light receiving elements two-dimensionally receive thermal radiation from the entire sealing portion 52 upon the light emission to the sealing portion 52. A thermopile may be applied to the point light receiving element. A microbolometer may be applied to the area light receiving element.

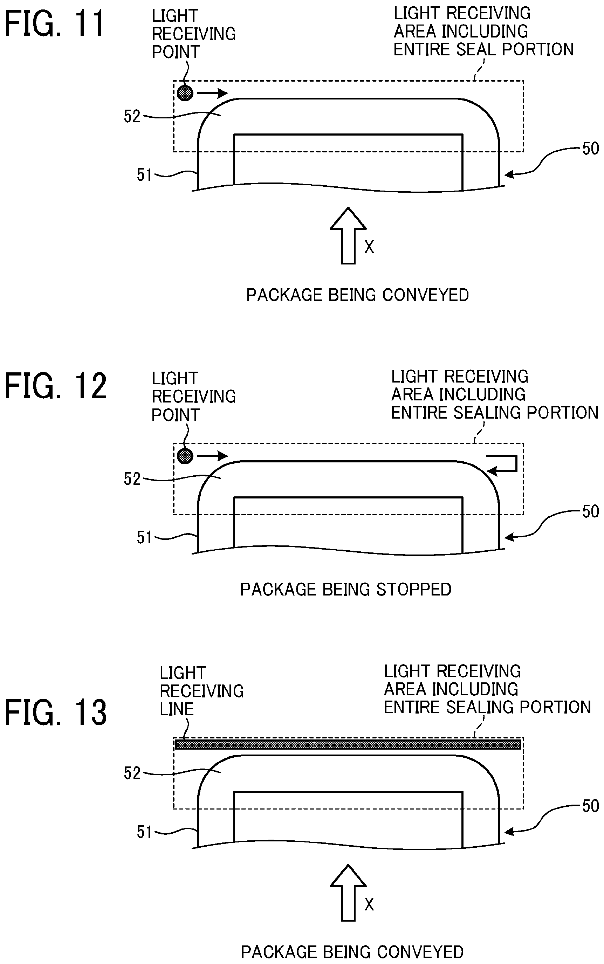

FIG. 11 is a diagram of the point light receiving element in the case of receiving thermal radiation from the package 50 being conveyed. FIG. 12 is a diagram of the point light receiving element in the case of receiving thermal radiation from the package 50 being stopped. As illustrated in FIG. 11, when the light receiving unit 32 receives thermal radiation from the package 50 being conveyed, the light receiving unit 32 two-dimensionally receives the thermal radiation with a point light receiving element through an optical system that one-dimensionally scans the sealing portion 52. As illustrated in FIG. 12, when the light receiving unit 32 receives thermal radiation from the package 50 being stopped, the light receiving unit 32 using the point light receiving element two-dimensionally receives the thermal radiation through the optical system that two-dimensionally scans the sealing portion 52.

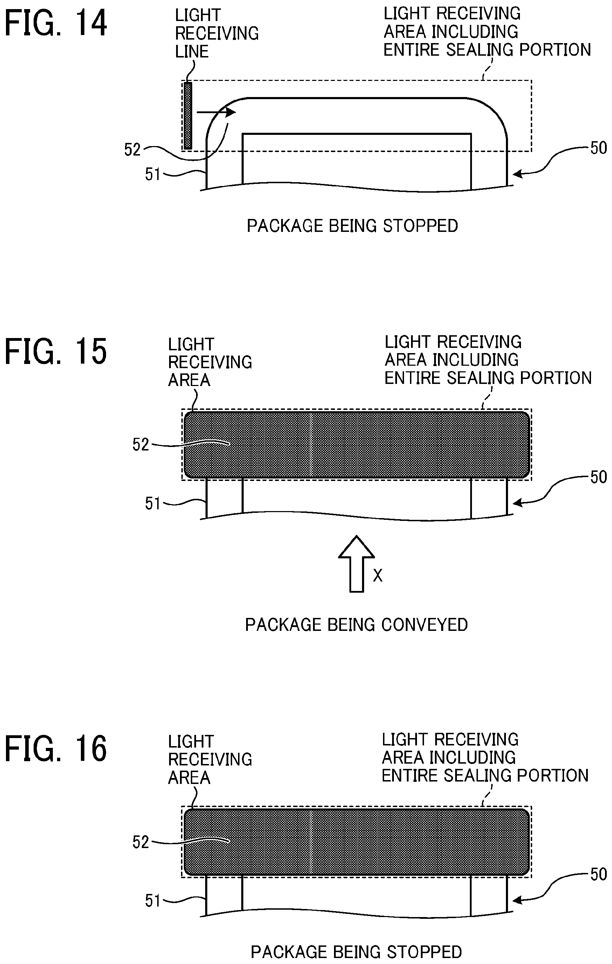

FIG. 13 is a diagram of the line light receiving element in the case of receiving thermal radiation from the package 50 being conveyed. FIG. 14 is a diagram of the line light receiving element in the case of receiving thermal radiation from the package 50 being stopped. As illustrated in FIG. 13, when the light receiving unit 32 receives thermal radiation from the package 50 being conveyed, the light receiving unit 32 two-dimensionally receives the thermal radiation using a line light receiving element longer than the width of the sealing portion 52. As illustrated in FIG. 14, when the light receiving unit 32 receives thermal radiation from the package 50 being stopped, the light receiving unit 32 two-dimensionally receives the thermal radiation with the line light receiving element slightly longer than the lateral width of the sealing portion 52 through an optical system that one dimensionally scans the sealing portion 52.

FIG. 15 is a diagram of the area light receiving element in the case of receiving thermal radiation from the package 50 being conveyed. FIG. 16 is a diagram of an example of an area light receiving element in the case of receiving thermal radiation from the package 50 being stopped. As illustrated in FIG. 15, when the light receiving unit 32 receives the thermal radiation from the package 50 being conveyed, the light receiving unit 32 receives the thermal radiation from the sealing portion 52 with the area light receiving element as one shot. As illustrated in FIG. 16, when the light receiving unit 32 receives the thermal radiation from the package 50 being stopped, the light receiving unit 32 receives the thermal radiation form the sealing portion 52 with the area light receiving element as one shot.

As described above, there are various modifications for the light emitting unit 31 that emits light to the entire sealing portion 52 and the light receiving unit 32 that receives thermal radiation from the entire sealing portion 52. In the present embodiment, the light emitting unit 31 is an area light source, and the light receiving unit 32 is an area light receiving element. As described above, by combining the area light source and the area light receiving element, the light can be emitted to the entire sealing portion 52 as one shot and the thermal radiation from the entire sealing portion 52 can be received as one shot, even when the package 50 is being conveyed or stopped. Further, in the case of using an area light source in which the point light sources (e.g., LEDs) are arranged vertically and horizontally and an area light receiving element, an optical system for one- or two-dimensional scanning (i.e., a movable component) may be excluded, and a higher-quality image can be obtained without being affected by vibration of the movable component.

The positional relation between the light emitting unit 31 and the light receiving unit 32 (i.e., arrangement or layout) will be described in detail.

As described above, the light receiving unit 32 does not directly receive the light emitted from the light emitting unit 31 and the light transmitted through the sealing portion 52 of the package material 51 or the light reflected from the sealing portion 52. The light receiving unit 32 receives light emitted from the surface of the package material 51 as the thermal radiation generated by the light emitted from the light emitting unit 31. The light emitting unit 31 and the light receiving unit 32 are not limited to an arrangement based on transmission of the light or regular reflection of the light. Thus, the latitude in the layout of the light emitting unit 31 and the light receiving unit 32 is increased.

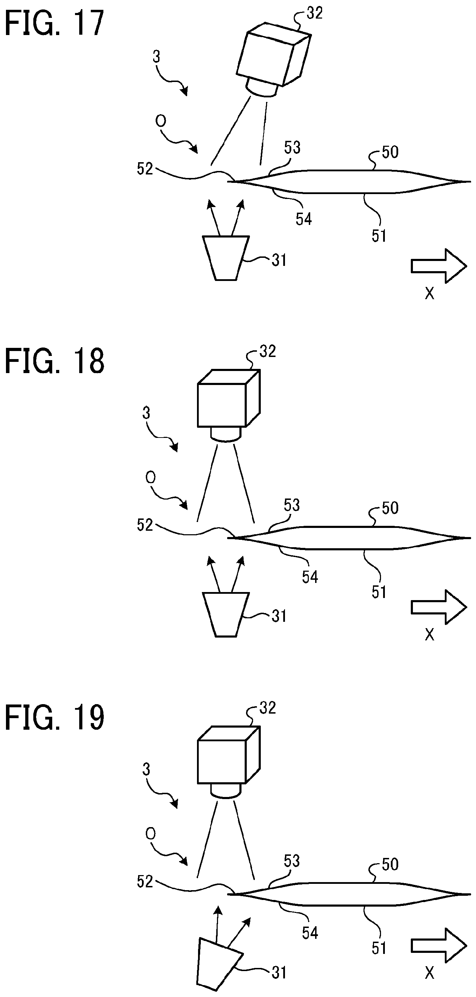

FIG. 17 is a diagram of a first layout of the light emitting unit 31 and the light receiving unit 32 as an example. In the example illustrated in FIG. 17, the light receiving unit 32 is installed with an optical axis tilted with respect to the light emitting unit 31 and the sealing portion 52 of the package material 51 having the surfaces substantially parallel to the conveying direction X. By titling the optical axis of the light receiving unit 32 with respect to the sealing portion 52 of the package material 51, the reflection (the reflection image) of the light receiving unit 32 itself can be prevented.

Specifically, as illustrated in FIG. 17, the package 50 has a bloated portion to pack the contents inside the package material 51. The package 50 has a slope portion 53 and a slope portion 54. The sealing portion 52 is substantially parallel to the conveying direction X, but the slope portion 53 is tilted upwards and the slope portion 54 is tilted downwards with respect to the conveying direction X. In FIG. 17, the light receiving unit 32 is installed with the optical axis tilted in the same manner as the slope portion 53.

FIG. 18 is a diagram of a second layout of the light emitting unit 31 and the light receiving unit 32 as an example. In the example illustrated in FIG. 18, under a condition that there is no influence of reflection of the light receiving unit 32 itself, the light receiving unit 32 may be disposed at a position orthogonal to the sealing portion 52 which is a surface substantially parallel to the conveying direction X without being tilted in the same direction as the slope portion 53.

FIG. 19 is a diagram of a third layout of the light emitting unit 31 and the light receiving unit 32 as an example. In the example illustrated in FIG. 19, in addition to the second layout of FIG. 18, the light emitting unit 31 is installed with its optical axis tilted with respect to the sealing portion 52 of the package material 51 and the light receiving unit 32 which are surfaces substantially parallel to the conveying direction X.

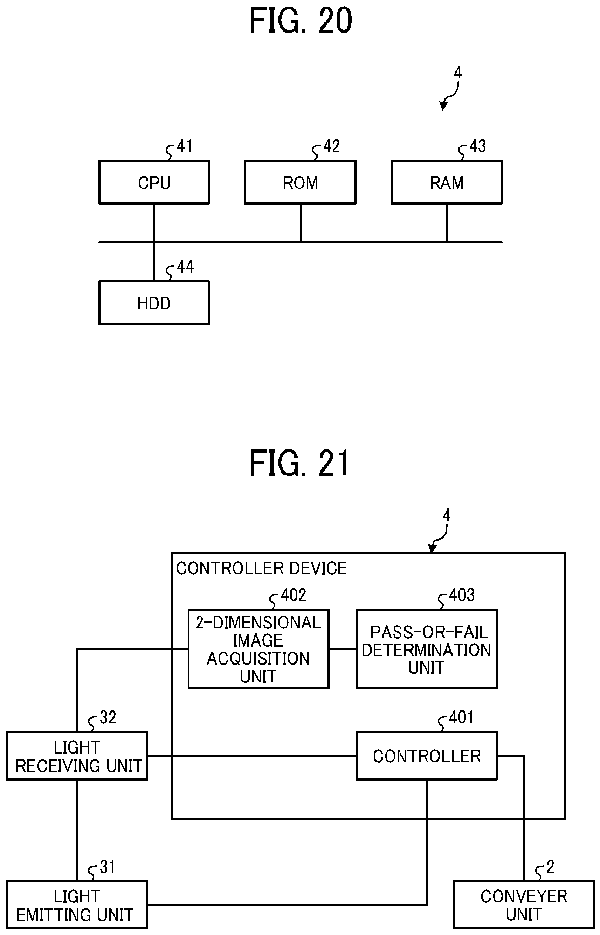

The controller unit 4 will be described. The controller unit 4 entirely controls the inspection apparatus 1. FIG. 20 is a block diagram of a hardware of the controller unit 4. As illustrated in FIG. 20, the controller unit 4 includes a central processing unit (CPU) 41, a read only memory (ROM) 42 , a random access memory (RAM) 43, and a hard disk drive (HDD) 44. The controller unit 4 controls each unit of the conveyor unit 2 and the image acquisition device 3 to drive using the RAM 43 as a working memory in accordance with a program stored in the RAM 43 or the HDD 44 in advance. As the controller unit 4, for example, a personal computer (e.g., desktop, notebook computer or laptop computer) can be used.

The program executed by the controller unit 4 according to the present embodiment may be provided by recorded in a computer-readable recording medium such as a compact disc read-only memory (CD-ROM), a flexible disk (FD), a compact disc recordable (CD-R), and a digital versatile disc (DVD) as a file of an installable format or an executable format.

Further, the program executed by the controller unit 4 according to the present embodiment may be stored in a computer connected to a network such as the Internet and provided by downloaded through the network. The program executed by the controller unit 4 according to the present embodiment may be provided or distributed through a network such as the Internet.

The controller unit 4 determines whether the sealing portion 52 of the package 50 is in a normal state or an anomaly state (i.e., defect) based on the two-dimensional image acquired by the image acquisition device 3.

The function of the controller unit 4 will be described.

FIG. 21 is a functional block diagram of the controller unit 4. As illustrated in FIG. 21, when the CPU 41 works in accordance with the program, the controller unit 4 works as a controller 401, a two-dimensional image acquisition unit 402, and a pass-or-fail determination unit 403.

The controller 401 controls light emission of the light emitting unit 31 and light reception of the light receiving unit 32 of the image acquisition device 3. The controller 401 controls the first conveyor part 21 and the second conveyor part 22 of the conveyor unit 2 to drive.

The two-dimensional image acquisition unit 402 acquires two-dimensional thermal information on the sealing portion 52 of the package 50 from thermal radiation information two-dimensionally received by the light receiving unit 32 as an image. The two-dimensional image acquisition unit 402 converts the light information into the thermal information and acquires a thermal image. The two-dimensional image acquisition unit 402 is also referred to as thermography (thermal image). The two-dimensional image acquisition unit 402 may be provided in an infrared camera in which the light receiving unit 32 is an uncooled microbolometer.

The pass-or-fail determination unit 403 determines whether the sealing portion 52 of the package 50 is in a normal state or an anomaly state, that is, pass or fail, according to the two-dimensional image having the thermal information. The pass-or-fail determination unit 403 applies various general image processing on the two-dimensional image in order to reveal an anomaly state.

As described above, when the sealing portion 52 of the package 50 has the anomaly state, the heat capacity of the sealing portion 52 changes as compared to the normal state. For example, when a content or a portion of the content of the package 50 is trapped in the sealing portion 52 (i.e., trapping), the trapping is a defect in which the content is trapped between the packaging materials (i.e., one package material 51 and the opposite packaging material 51). Thus, a new layer is generated by the content trapped in the sealing portion 52, and heat transfer slows. A tunnel is a defect in which a passage through which the content leaks to the outside of the package is formed in the sealing portion 52. Since there is an air layer between one packaging material 51 and the opposite package material 51, heat transmission slows due to high thermal resistance of air. When the sealing portion 52 of the package 50 is in an anomaly state as described above, it takes time for heat to reach the surface of the sealing portion 52 and the time delays, so that a temperature distribution occurs on the surface. Thus, the pass-or-fail determination unit 403 can determine that the two-dimensional image is in an anomaly state, that is, not acceptable, based on the temperature distribution generated in the two-dimensional image having the thermal information.

The pass-or-fail determination of the sealing portion 52 in the pass-or-fail determination unit 403 will be described.

FIG. 22 is a graph of a change in surface temperature between a position in a normal state and a position in an anomaly state illustrated in FIG. 23. FIG. 23 is a two-dimensional image related to the pass-or-fail determination of the sealing portion 52 as an specific example. In FIG. 23, as an example of the anomaly state, an air layer is in the sealing portion 52. The anomaly state described above also occurs in the tunnel or the trapping of the content including air.

In the example illustrated in FIG. 22, light is emitted from the light emitting unit 31 to one side of the sealing portion 52 including aluminum and having the normal state and the anomaly state at time 0, and the temperature distribution of the surface at the other side of the sealing portion 52 is acquired at certain time.

The two-dimensional image in FIG. 23 is an image acquired at time A in FIG. 22. The image in FIG. 23 is a monochrome image in which a white portion indicates higher temperature and a grey portion indicates a lower temperature. As illustrated in FIG. 23, the position in which the anomaly state (i.e., defect) occurs due to the air layer in the sealing portion 52 is darker than the surroundings.

In the example in FIG. 22, the position of the normal state reaches the peak temperature at time T. Although this time varies depending on the type and thickness of the package material 51, it is about several 100 milliseconds (ms) to 1 second (s) or less. By contrast, as illustrated in FIG. 22, the position of the anomaly state (defect) reaches the peak temperature after the time T, and the peak temperature of the normal state and the anomaly state are almost the same. From FIG. 22, when the time t is larger than 0 and smaller than T (i.e., 0 < t < T), the temperature is higher in the normal state than in the anomaly state. The normal state and the anomaly state have substantially the same peak temperature as time passes, and the temperature difference is smaller after the peak temperature.

As described above, when the air layer is present in the sealing portion 52 as illustrated in FIG. 23, the thermal resistance of the sealing portion 52 in which the air layer is present increases. As a result, heat transfer slows. The time varying of the surface temperature of the sealing portion 52 is different between the normal state and the anomaly state, and a large temperature difference capable of detection is generated at a certain time. The pass-or-fail determination unit 403 can detect an anomaly state by acquiring the two-dimensional image at this time.

Depending on the anomaly state, the thermal resistance may become smaller and the temperature may become higher than the ambient temperature. In such a case, the anomaly state of the sealing portion 52 can be detected by inspecting the difference between the normal state and the anomaly state.

As described above, the inspection apparatus 1 determines whether the sealing portion 52 of the package 50 is in the normal or the anomaly state. Further, in the inspection apparatus 1, after the package 50 is conveyed by the second conveyor part 22 of the conveyor unit 2, the package 50 determined to have a defect (i.e., anomaly state) is removed from the second conveyor part 22 by a sorting means (e.g., rejector). By contrast, the package 50 determined to be a normal state is conveyed by the second conveyor part 22 and packed into a box by a packing means (e.g., caser) or manually.

As described above, according to the present embodiment, light including at least one of ultraviolet light, visible light, or near-infrared light is emitted to the package 50, and light having a wavelength longer than a wavelength of the near-infrared rays thermally radiated from the package 50 is received. Thus, light transmitted through the sealing portion 52 of the package 50 and light reflected by the sealing portion 52 of the package 50 are not used. Thus, the wavelengths of light emission and light reception are different. Since the layout of the light emitting unit 31 and the light receiving unit 32 is not limited to a layout of facing each other, the latitude of the layout of the light emitting unit 31 and the light receiving unit 32 used for the inspection of the package 50 is increased.

In the present embodiment, aluminum is used as a material that absorbs energy of light, but the material is not limited thereto, and other metals or resins may be used as long as the material absorbs energy of light (light energy) and converts into thermal energy.

In the present embodiment, a retort pouch is applied as the packaging material 51 of the package 50, but the package material 51 is not limited thereto, and can be applied to various package materials 51 that packs contents and seal openings. Examples of the package material 51 of the package 50 include, for example, a lid of a yogurt container, a container for sealing a medicine tablet.

Although the embodiments of the present invention have been described in detail with reference to the drawings, the above embodiments are merely examples of the present invention, and the present invention is not limited to the configurations of the above embodiments. Design changes and the like that do not depart from the present invention are also included in the present invention.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium also includes a storage medium for storing processor readable code such as a floppy disk, a hard disk, a compact disc read-only memory (CD-ROM), a magnetic tape device, or a solid state memory device.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), a digital signal processor (DSP), a field programmable gate array (FPGA), and conventional circuit components arranged to perform the recited functions.

This patent application is based on and claims priority to Japanese Patent Application No. 2021-141913, filed on August 31, 2021 and Japanese Patent Application No. 2022-124250, filed on August 03, 2022, in the Japan Patent Office.

### [Reference Signs List]

1 Inspection apparatus
31 Light emitting unit
32 Light receiving unit
51 Package material
52 Sealing portion
402 Two-dimensional image acquisition unit
403 Pass-or-fail determination unit

## Claims

1. An inspection apparatus comprising:
a light emitting unit (31) configured to emit light to a sealing portion (52) of a package (50) including a light energy absorbing material (51), the light having a wavelength absorbed by the light energy absorbing material (51);
a light receiving unit (32) configured to detect thermal radiation from the sealing portion (52) as thermal information, wherein the light emitted from the light emitting unit (31) has a first wavelength, **characterised in that** the light receiving unit (32) is configured to detect thermal radiation having a second wavelength, and the first wavelength is different from the second wavelength; and
a two-dimensional image acquisition unit (402) configured to acquire the thermal information on the sealing portion (52) as a two-dimensional image through the light receiving unit (32), wherein the light receiving unit (32) is configured not to detect the first wavelength of the light emitted from the light emitting unit (31).

2. The inspection apparatus according to claim 1,
wherein the light emitting unit (31) emits at least one of ultraviolet light, visible light, and near infrared light.

3. The inspection apparatus according to claim 1 or claim 2,
wherein the light emitting unit emits light excluding a wavelength longer than near infrared wavelengths.

4. The inspection apparatus according to any one preceding claim,
wherein the light emitting unit (31) is a light emitting diode or a laser, each having a peak wavelength in near infrared wavelengths.

5. The inspection apparatus according to any one preceding claim,
wherein the light receiving unit (32) receives the thermal radiation having a wavelength longer than a wavelength of middle wavelength infrared radiation.

6. The inspection apparatus according to any one preceding claim,
wherein the light receiving unit (32) is an uncooled infrared light receiving element configured to receive long wavelength infrared radiation.

7. The inspection apparatus according to any one preceding claim,
wherein the light emitting unit (31) emits light to the sealing portion (52) as one shot, and the light receiving unit (32) receives thermal radiation from the sealing portion (52) as one shot.

8. The inspection apparatus according to any one preceding claim,
wherein the light emitting unit (31) is an area light source in which point light sources are arrayed in vertical and horizontal directions.

9. The inspection apparatus according to any one preceding claim further comprising: a pass-or-fail determination unit configured to determine whether the sealing portion (52) is pass or fail through the two-dimensional image acquired by the two-dimensional image acquisition unit (402).

10. An inspection method comprising:
emitting light by a light emitting unit (31) to a sealing portion (52) of a package (50) including a light energy absorbing material (51), the light having a wavelength absorbed by the light energy absorbing material (51);
detecting thermal radiation from the sealing portion (52) by a light receiving unit (32) as thermal information, wherein the light emitted from the light emitting unit (31) has a first wavelength, **characterised in that**
the light receiving unit (32) is configured to detect thermal radiation having a second wavelength, and the first wavelength is different from the second wavelength; and acquiring the thermal information on the sealing portion (52) as a two-dimensional image through the light receiving unit (32),
wherein the detecting does not detect the wavelength of the light emitted from the light emitting unit (31).

## Patentansprüche

1. Inspektionseinrichtung, umfassend:
eine Leuchteinheit (31), die so konfiguriert ist, dass sie Licht auf einen Dichtungsabschnitt (52) einer Verpackung (50) emittiert, die ein lichtabsorbierendes Material (51) enthält, wobei das Licht eine Wellenlänge aufweist, die von dem lichtabsorbierenden Material (51) absorbiert wird;
eine Lichtempfangseinheit (32), die so konfiguriert ist, dass sie die Wärmestrahlung des Dichtungsbereichs (52) als thermische Information detektiert, wobei das von der Leuchteinheit (31) emittierte Licht eine erste Wellenlänge aufweist, **dadurch gekennzeichnet, dass**
die Lichtempfangseinheit (32) so konfiguriert ist, dass sie Wärmestrahlung detektiert, die eine zweite Wellenlänge aufweist, und die erste Wellenlänge sich von der zweiten Wellenlänge unterscheidet; und eine Aufnahmeeinheit zweidimensionaler Bilder (402), die so konfiguriert ist, dass sie die thermischen Informationen über den Dichtungsbereich (52) als zweidimensionales Bild über die Lichtempfangseinheit (32) erfasst, wobei die Lichtempfangseinheit (32) so konfiguriert ist, dass sie die erste Wellenlänge des von der Leuchteinheit (31) emittierten Lichts nicht detektiert.

2. Inspektionseinrichtung nach Anspruch 1,
wobei die Leuchteinheit (31) mindestens eines von ultraviolettem Licht, sichtbarem Licht und Nahinfrarotlicht emittiert.

3. Inspektionseinrichtung nach Anspruch 1 oder Anspruch 2,
wobei die Leuchteinheit Licht mit Ausnahme einer Wellenlänge emittiert, die länger als Wellenlängen des Nahinfrarotbereichs sind.

4. Inspektionseinrichtung nach einem vorstehenden Anspruch,
wobei es sich bei der Leuchteinheit (31) um eine Leuchtdiode oder einen Laser handelt, die jeweils eine Spitzenwellenlänge im Nahinfrarotbereich aufweisen.

5. Inspektionseinrichtung nach einem vorstehenden Anspruch,
wobei die Lichtempfangseinheit (32) die Wärmestrahlung empfängt, die eine Wellenlänge aufweist, die länger als eine Wellenlänge mittelwelliger Infrarotstrahlung ist.

6. Inspektionseinrichtung nach einem vorstehenden Anspruch,
wobei es sich bei der Lichtempfangseinheit (32) um ein ungekühltes Infrarot-Lichtempfangselement handelt, das zum Empfang langwelliger Infrarotstrahlung konfiguriert ist.

7. Inspektionseinrichtung nach einem vorstehenden Anspruch,
wobei die Leuchteinheit (31) Licht als einen einzigen Strahl an den Dichtungsbereich (52) emittiert und die Leuchteinheit (32) Wärmestrahlung vom Dichtungsbereich (52) als einen einzigen Strahl empfängt.

8. Inspektionseinrichtung nach einem vorstehenden Anspruch,
wobei es sich bei der Leuchteinheit (31) um eine Flächenlichtquelle handelt, in der Punktlichtquellen in vertikaler und horizontaler Richtung angeordnet sind.

9. Inspektionseinrichtung nach einem vorstehenden Anspruch, weiter umfassend:
eine Gut-oder-Schlecht-Bestimmungseinheit, die so konfiguriert ist, dass sie anhand des von der Aufnahmeeinheit zweidimensionaler Bilder (402) erfassten zweidimensionalen Bildes bestimmt, ob der Dichtungsbereich (52) gut oder schlecht ist.

10. Inspektionsverfahren, umfassend:
Emittieren von Licht durch eine Leuchteinheit (31) an einen Dichtungsabschnitt (52) einer Verpackung (50), die ein lichtabsorbierendes Material (51) enthält, wobei das Licht eine Wellenlänge aufweist, die von dem lichtabsorbierenden Material (51) absorbiert wird;
Detektieren einer Wärmestrahlung des Dichtungsbereichs (52) durch eine Lichtempfangseinheit (32) als thermische Information durch eine Lichtempfangseinheit, wobei das von der Leuchteinheit (31) emittierte Licht eine erste Wellenlänge aufweist, **dadurch gekennzeichnet, dass**
die Lichtempfangseinheit (32) so konfiguriert ist, dass sie Wärmestrahlung detektiert, die eine zweite Wellenlänge aufweist, und die erste Wellenlänge sich von der zweiten Wellenlänge unterscheidet; und Erfassen der thermischen Informationen über den Dichtungsbereich (52) als zweidimensionales Bild über die Lichtempfangseinheit (32),
wobei die Detektion die Wellenlänge des von der Leuchteinheit (31) emittierten Lichts nicht detektiert.

## Revendications

1. Appareil d'inspection comprenant :
une unité électroluminescente (31) configurée pour émettre de la lumière vers une partie d'étanchéité (52) d'un emballage (50) incluant un matériau absorbant l'énergie de la lumière (51), la lumière présentant une longueur d'onde absorbée par le matériau absorbant l'énergie de la lumière (51) ;
une unité réceptrice de lumière (32) configurée pour détecter un rayonnement thermique provenant de la partie d'étanchéité (52) en tant qu'information thermique, dans lequel la lumière émise à partir de l'unité électroluminescente (31) présente une première longueur d'onde, **caractérisé en ce que**
l'unité réceptrice de lumière (32) est configurée pour détecter un rayonnement thermique présentant une seconde longueur d'onde et la première longueur d'onde est différente de la seconde longueur d'onde ; et une unité d'acquisition d'images bidimensionnelles (402) configurée pour acquérir les informations thermiques sur la partie d'étanchéité (52) sous forme d'image bidimensionnelle à travers l'unité réceptrice de lumière (32), dans lequel l'unité réceptrice de lumière (32) est configurée pour ne pas détecter la première longueur d'onde de la lumière émise à partir de l'unité électroluminescente (31).

2. Appareil d'inspection selon la revendication 1,
dans lequel l'unité électroluminescente (31) émet au moins une lumière parmi une lumière ultraviolette, une lumière visible et une lumière proche infrarouge.

3. Appareil d'inspection selon la revendication 1 ou la revendication 2,
dans lequel l'unité électroluminescente émet une lumière excluant une longueur d'onde supérieure aux longueurs d'onde du proche infrarouge.

4. Appareil d'inspection selon une quelconque revendication précédente,
dans lequel l'unité électroluminescente (31) est une diode électroluminescente ou un laser, chacun présentant une longueur d'onde de crête dans des longueurs d'onde du proche infrarouge.

5. Appareil d'inspection selon une quelconque revendication précédente,
dans lequel l'unité réceptrice de lumière (32) reçoit le rayonnement thermique présentant une longueur d'onde supérieure à une longueur d'onde d'un rayonnement infrarouge de longueur d'onde moyenne.

6. Appareil d'inspection selon une quelconque revendication précédente,
dans lequel l'unité réceptrice de lumière (32) est un élément récepteur de lumière infrarouge non refroidi configuré pour recevoir un rayonnement infrarouge de grande longueur d'onde.

7. Appareil d'inspection selon une quelconque revendication précédente,
dans lequel l'unité électroluminescente (31) émet de la lumière vers la partie d'étanchéité (52) en une seule fois et l'unité réceptrice de lumière (32) reçoit un rayonnement thermique provenant de la partie d'étanchéité (52) en une seule fois.

8. Appareil d'inspection selon une quelconque revendication précédente,
dans lequel l'unité électroluminescente (31) est une source de lumière étendue dans laquelle des sources de lumière ponctuelles sont disposées dans des directions verticales et horizontales.

9. Appareil d'inspection selon une quelconque revendication précédente comprenant en outre :
une unité de détermination de réussite ou d'échec configurée pour déterminer si la partie d'étanchéité (52) est réussie ou non à travers l'image bidimensionnelle acquise par l'unité d'acquisition d'images bidimensionnelles (402).

10. Procédé d'inspection comprenant :
l'émission de la lumière par une unité électroluminescente (31) vers une partie d'étanchéité (52) d'un emballage (50) incluant un matériau absorbant l'énergie de la lumière (51), la lumière présentant une longueur d'onde absorbée par le matériau absorbant l'énergie de la lumière (51) ;
la détection d'un rayonnement thermique provenant de la partie d'étanchéité (52) par une unité réceptrice de lumière (32) comme information thermique, dans lequel la lumière émise à partir de l'unité électroluminescente (31) présente une première longueur d'onde, **caractérisé en ce que**
l'unité réceptrice de lumière (32) est configurée pour détecter un rayonnement thermique présentant une seconde longueur d'onde et la première longueur d'onde est différente de la seconde longueur d'onde ; et l'acquisition des informations thermiques sur la partie d'étanchéité (52) sous forme d'image bidimensionnelle à travers l'unité réceptrice de lumière (32),
dans lequel la détection ne détecte pas la longueur d'onde de la lumière émise à partir de l'unité électroluminescente (31).
